# EUROPÄISCHE PATENTSCHRIFT

(11) **EP 4 453 459 B1**
(45) Veröffentlichungstag und Bekanntmachung des Hinweises auf die Patenterteilung: **25.06.2025**
(21) Anmeldenummer: 22801386.8
(22) Anmeldetag: 07.10.2022
(51) Int. Cl.: F16K 31/60, F16K 31/05, F16K 31/04, F16K 31/53, F16K 37/00, F16H 1/46, F16H 3/20, F16H 3/00

(54) **STELLANTRIEB**
ACTUATOR
ACTIONNEUR

(30) Priorität: 23.12.2021 DE 102021134550
(43) Veröffentlichungstag der Anmeldung: 30.10.2024
(73) Patentinhaber: AUMA Riester GmbH & Co. KG, 79379 Müllheim (DE)
(72) Erfinder: WIRTZ, Anna, 57482 Wenden (DE); HOFMANN, Benjamin, 79423 Heitersheim (DE)
(74) Vertreter: Mertzlufft-Paufler, Cornelius
(86) Internationale Anmeldenummer: PCT/EP2022/077880
(87) Internationale Veröffentlichungsnummer: WO 2023/117169

(56) Entgegenhaltungen:
- EP-A1- 1 646 817
- WO-A1-2011/063904
- CN-A- 112 049 977
- CN-U- 211 779 270
- DE-A1- 10 322 832
- US-A- 4 647 007
- US-A- 4 759 386
- US-A- 5 295 907
- US-A- 5 921 527
- US-A- 6 084 370
- US-A1- 2016 380 509
- US-A1- 2018 283 574

## Beschreibung

Die Erfindung betrifft einen Stellantrieb, insbesondere einen Stellantrieb mit einer einkuppelbaren Handantriebswelle zum Handantrieb und einen Stellantrieb umfassend einen in einem Gehäuse angeordneten Stapelaufbau.

Stellantriebe werden unter anderem dazu verwendet, Armaturen und/oder Ventile zu betätigen. Bei dieser Art Stellantrieben kann es erforderlich sein, die Möglichkeit einer Handbetätigung des Stellantriebs vor Ort wahrzunehmen, insbesondere zur Notbetätigung des Stellantriebs bei Ausfall einer Antriebseinheit des Stellantriebs, beispielsweise eines Elektromotors.

Bei bekannten Stellantrieben der eingangs erwähnten Art ist beispielsweise an einer Welle zum Handantrieb ein Handrad ausgebildet, welches mit einer Kupplungseinrichtung in den Kraftfluss oder Drehmomentfluss zur Antriebswelle gebracht werden kann. Derartige Kupplungseinrichtungen weisen jedoch oftmals einen komplizierten und/oder störungsanfälligen Aufbau auf.

Darüber hinaus umfassen Stellantriebe der eingangs erwähnten Art oftmals Stapelaufbauten innerhalb des Gehäuses des Stellantriebs. Die Stapelaufbauten können Funktionselemente des Stellantriebs, wie beispielsweise Motoren zum Antrieb oder Kupplungsmittel zum Handantrieb des Stellantriebs umfassen. Eine sichere Verbindung des Stapelaufbaus mit dem Gehäuse ist dabei notwendig, insbesondere um schädigende oder störende (Vibrations-)Bewegungen des Stapelaufbaus relativ zum Gehäuse zu verhindern. Bekannte Verbindungen sind jedoch auf komplizierte Weise und innerhalb starren Toleranzgrenzen herzustellen, die inkompatibel mit Veränderungen des Stapelaufbaus während des Herstellungsprozesses und/oder während der Verwendung des Stellantriebs sind. Dies kann den Herstellungsprozess erschweren sowie zu Störungen oder Schäden während der Verwendung des Stellantriebs führen.

Die DE 103 22 832 A1 beschreibt eine Vorrichtung zur Handnotbetätigung für ein Ventil mit einer Absperrvorrichtung und mit einer in einem Gehäuse angeordneten Betätigungsvorrichtung, wobei die Betätigungsvorrichtung mit der Absperrvorrichtung lösbar angeordnet ist, wobei zumindest ein Getriebe zur Übertragung der Betätigungsenergie auf die Absperrvorrichtung vorgesehen ist. Die Vorrichtung weist ein Spezialwerkzeug auf und das Getriebe ist mit Hilfe dieses Spezialwerkzeuges von außen betätigbar.

Die US 6 084 370 A beschreibt eine Schaltvorrichtung für den Handantrieb eines elektromotorischen Stellantriebs zur Steuerung von Armaturen. Um den Handantrieb mit wenigen Bauteilen zu verbinden und dabei einen einfachen Aufbau zu gewährleisten, wobei die Wirkverbindung zwischen dem Antriebsmotor und dem Nebenabtrieb während des Handantriebs erhalten bleibt, ist ein Antriebswellenstumpf der axial feststehenden Antriebswelle mit einem radialen Kupplungsstift versehen. Die Handradwelle ist axial verschiebbar und fluchtend zur Antriebswelle gelagert. Das dem Handrad gegenüberliegende Ende der Handradwelle ist mit einer Kupplungshülse versehen, die gegen die Kraft einer Druckfeder axial verschiebbar ist. Das der Antriebswelle zugewandte Ende der Kupplungsmuffe hat eine Nut, deren Eingang beidseitig durch Auflaufschrägen verbreitert ist. Der Handantrieb verfügt über Mittel zur Betätigung eines im Stromkreis des Antriebsmotors angeordneten elektrischen Schalters, der im Ruhezustand des Handantriebs geschlossen und beim Einschalten der Handradwelle geöffnet ist.

Die WO 2011/063904 A1 beschreibt eine Betätigungsvorrichtung für Gehäuse- oder gehäuselose Armaturen; insbesondere für Armaturen für Rohrleitungen zum Transport von flüssigem oder gasförmigem Medium, vorzugsweise für Rohrleitungen ab einer Nennweite von DN 100 oder Gerinne, mit einem Antriebsmotor, einem Getriebe, sowie einem Notlaufantrieb, mittels dem das Getriebe unabhängig vom Antriebsmotor betätigbar ist, wobei als Antriebsmotor ein Servomotor vorgesehen ist, welcher eine Messeinrichtung aufweist, die die jeweils aktuelle Position des Servomotors bezüglich seiner Anfangsposition bestimmt und entsprechende Messwerte ausgibt, ein Arbeitsspeicher vorgesehen ist, in den die Messwerte der Messeinrichtung des Servomotors eingeschrieben werden, eine elektronische Steuerungseinheit vorgesehen ist, die die Messwerte der Messeinrichtung des Servomotors ausliest und eine Positionssteuerung des Servomotors und damit der Betätigungsvorrichtung aufgrund der Messwerte der Messeinrichtung des Servomotors vornimmt.

Die US 4 759 386 A beschreibt einen elektrochemischen Linearantrieb zur automatischen Steuerung eines linearen Gaszuführungsventils, der beispielsweise mit einer leicht zugänglichen und einfach zu bedienenden manuellen Übersteuerungsmöglichkeit ausgestattet ist und gleichzeitig eine genaue Positionsanzeige des gesteuerten linearen Bewegungsventils sowohl im automatischen als auch im manuellen Betrieb bietet.

Die US 5 295 907 A beschreibt eine Vorrichtung zur Begrenzung des Drehmoments, das von einer Antriebswelle auf eine angetriebene Welle übertragen wird, mit einem ersten Körper, der einen zylindrischen Abschnitt aufweist und zur Drehung mit einer Welle geeignet ist, und einem zweiten Körper, der einen zylindrischen Abschnitt aufweist und zur Drehung der anderen Welle geeignet ist. Der zylindrische Teil des einen Körpers ist innerhalb des zylindrischen Teils des anderen Körpers für eine relative Drehung in Bezug auf diesen um eine Achse montiert, die exzentrisch zur Drehachse des einen Körpers ist. Ein Stift, der vom zylindrischen Teil des anderen Körpers für eine radiale Bewegung in Bezug auf diesen getragen wird, hat ein inneres und ein äußeres Ende, wobei das innere Ende durch einen C-Ring mit dem zylindrischen Teil des einen Körpers in Eingriff gehalten wird, damit die Antriebswelle die angetriebene Welle drehen kann, bis das zwischen ihnen übertragene Drehmoment den C-Ring überwindet, damit sich die zylindrischen Teile der Körper relativ zueinander drehen können.

Die US 4 647 007 A beschreibt einen automatischen Ventilantrieb, der eine manuelle Übersteuerung zur selektiven manuellen und motorischen Verstellung eines Ventils ermöglicht. Der Ventilantrieb umfasst einen Antriebsmotor, eine Getriebebaugruppe und eine axial verschiebbare Kupplungswelle zum selektiven Ein- oder Auskuppeln aus der Getriebebaugruppe. Durch das Verschieben der Kupplungswelle werden elektrische Schalter betätigt, die den Antriebsmotor des Ventilantriebs im Wesentlichen gleichzeitig stromlos schalten. Die Kupplungswelle bleibt während der axialen Verschiebung mit dem Ventil verbunden, wodurch eine manuelle Verschiebung des Ventils unabhängig von Getriebe und Motor möglich ist. Einstellbare Endschalterbetätigungsmanschetten und eine umkehrbare elektrische Verbindungsbaugruppe werden ebenfalls offengelegt.

Aufgabe der Erfindung ist es daher, einen verbesserten Stellantrieb bereitzustellen, insbesondere einen Stellantrieb zu schaffen, dessen Herstellung und Handhabung vereinfacht ist.

Die Lösung diese Aufgabe besteht bei dem Stellantrieb der eingangs erwähnten Art insbesondere darin, dass der Stellantrieb mit einer einkuppelbaren Welle zum Handbetrieb ein Handbedienelement umfasst, wobei das Handbedienelement lösbar mit einem Gehäuse des Stellantriebs verbindbar ist, und wobei das Handbedienelement in einer mit dem Gehäuse verbundener Position die Kupplung der Handantriebswelle zu einem Getriebe des Stellantriebs erzwingt, insbesondere wobei das Handbedienelement in der mit dem Gehäuse verbundenen Position direkt oder indirekt mit der Handantriebswelle gekoppelt ist.

Das Getriebe des Stellantriebs ist beispielsweise ein (Haupt-) Antriebsgetriebe, das mit einem Motor, insbesondere mit einem Elektromotor des Stellantriebs angetrieben werden kann. Durch den beschriebenen Stellantrieb ist eine Möglichkeit des Handantriebs des Stellantriebs geschaffen, die einen sehr einfachen mechanischen Aufbau zur wahlweisen Einkupplung der Handantriebswelle aufweist. Mit anderen Worten: Es kann auf aufwändige Zusatzaufbauten verzichtet werden. Hierdurch ist die Robustheit des Stellantriebs erhöht sowie die Handhabung und der Herstellungsprozess vereinfacht.

Erfindungsgemäß ist vorgesehen, dass das Handbedienelement in der mit dem Gehäuse verbundener Position die Handantriebswelle in eine eingekuppelte Position,

vorzugsweise entgegen einer Rückstellkraft, entlang einer Längsachse der Handantriebswelle zwingt.

Insbesondere kann das Handbedienelement in der mit dem Gehäuse verbundenen Position die Handantriebswelle aus einer entkuppelten Position in eine eingekuppelte Position zwingen, in der die Handantriebswelle mit dem Getriebe des Stellantriebs gekoppelt ist. Dies stellt eine besonders einfache und robuste Variante der wahlweisen Einkupplung der Handantriebswelle dar.

In einer Ausgestaltung ist vorgesehen, dass ein Kupplungsmittel der Handantriebswelle in einer oder der eingekuppelten Position der Handantriebswelle mit einem Kupplungsmittel des Getriebes, vorzugsweise direkt, kraft- und/oder formschlüssig verbunden ist.

Das bzw. die Kupplungsmittel können beispielsweise Eingreifmittel, wie Zahnräder und/oder Reibräder sein, die vorzugsweise ineinandergreifen. Auf diese Weise ist der Aufbau des Stellantriebs weiter vereinfacht.

Erfindungsgemäß ist vorgesehen, dass das Handbedienelement drehbar in einem Aufnahmeelement angeordnet ist, das mit einem Bajonettverschluss mit dem Gehäuse verbindbar ist und/oder wobei das Handbedienelement ein oder das Aufnahmeelement aufweist, welches mit dem Gehäuse drehbar einrastet.

Dies ermöglicht eine einfache Montage des Handbedienelements an dem Gehäuse. Damit ist die Einkupplung der Handantriebswelle und die Handhabung des Stellantriebs weiter vereinfacht.

In einer Ausgestaltung ist vorgesehen, dass zwischen einer Kupplungsstelle des Gehäuses für das Handbedienelement und dem Getriebe eine Rutschkupplung, insbesondere eine Toleranzhülse, ausgebildet ist.

Auf diese Weise kann eine Überlastung des Handantriebs auch bei geringer Kraftauslegung durch den Handbetrieb vermieden werden.

In einer Ausgestaltung ist vorgesehen, dass der Stellantrieb ferner eine oder die Rutschkupplung, insbesondere eine oder die Toleranzhülse, umfassendes Kupplungselement zur Kupplung des Handantriebselements mit der Handantriebswelle umfasst.

Derart kann eine Überlastung des Handantriebs auch bei geringer Kraftauslegung durch den Handbetrieb vermieden werden, ohne die Anzahl der Stellantriebskomponenten zu erhöhen. Somit ist der Aufbau des Stellantriebs weiter vereinfacht.

In einer Ausgestaltung ist vorgesehen, dass die Handantriebswelle oder ein bewegliches Kupplungselement zur Kupplung der Handantriebswelle mit dem Getriebe ein detektierbares Element aufweist, welches mit einem Sensor zusammenwirkt, um die oder eine eingekuppelte Position von einer ausgekuppelten Position der Handantriebswelle zu unterscheiden.

Das detektierbare Element kann beispielsweise ein Permanentmagnet sein, der durch einen Magnetfeldsensor, der stationär, beispielsweise am Gehäuse oder einer eingebauten Steuerungselektronik des Stellantriebs, angeordnet ist, überwacht wird. Derart kann die eingekuppelte Position der Handantriebswelle auf besonders einfache Weise detektiert werden. Ferner kann die eingekuppelte Position erkannt und daraufhin eine weitere Antriebseinheit zum Antrieb des Getriebes, deaktiviert werden, beispielsweise ein oder der (Elektro-) Motor des Stellantriebs. Somit ist die Einkupplung des Handantriebs und die Handhabung des Stellantriebs weiter vereinfacht. Darüber hinaus können durch Betätigung des Handantriebs verursachte Über- oder Fehlbeanspruchung oder - belastung und schließlich Schäden der weiteren Antriebseinheit und/oder des Stellantriebs vermieden werden.

In einer Ausgestaltung ist vorgesehen, dass das Handbedienelement, insbesondere eine Handantriebskurbel, an dem Stellantriebsgehäuse befestigbar ist.

Hierdurch wird eine besonders kompakte Bauweise des Stellantriebs erreicht.

In einer Ausgestaltung ist vorgesehen, dass der Stellantrieb ferner umfasst: einen Dichtring, der zwischen zwei Gehäuseteilen des Stellantriebsgehäuse eingelegt ist; und/oder ein Band, insbesondere ein Spannband, das zumindest teilweise um das Gehäuse oder ein Gehäuseteil des Stellantriebs angeordnet ist; wobei das Stellantriebsgehäuse und/oder das Band eine vorzugsweise angeformte Aufnahme, insbesondere eine Rastaufnahme und/oder eine magnetische Aufnahme, für das Handbedienelement aufweist.

Die Rastaufnahme ist beispielsweise eine Rastverbindung und kann insbesondere als fingerartiger Vorsprung ausgestaltet sein. Das Band oder Spannband stellt beispielsweise Kabeldurchführungen für den Stellantrieb bereit. Mit anderen Worten: Kabeldurchführungen des Bands oder Spannbands können derart an dem Stellantrieb angeordnet sein, dass sie mit einer Öffnung im Gehäuse des Stellantriebs überlappen. Insbesondere kann vorgesehen sein, dass die Form des in oder an der Aufnahme angeordnete Handbedienelements der Form des Gehäuses oder eines Gehäuseteils folgt. Hierdurch wird die Kompaktheit der Bauweise des Stellantriebs weiter verbessert.

In einer Ausgestaltung ist vorgesehen, dass der Stellantrieb ferner umfasst: eine Abdeckung für eine oder die Kupplungsstelle des Gehäuses für das Handbedienelement.

An der Kupplungsstelle des Gehäuses ist das Handbedienelement lösbar mit dem Gehäuse oder einem Gehäuseteil des Stellantriebs verbindbar. Die Abdeckung kann auf die Kupplungsstelle aufgesetzt werden, wenn das Handbedienelement entfernt ist, um eine Verschmutzung der Kupplungsstelle zu vermeiden. Hierdurch wird die Robustheit bzw. Langlebigkeit des Stellantriebs weiter verbessert.

Als ein weiterer möglicherweise eigenständiger Aspekt besteht die Lösung der eingangs genannten Aufgabe bei einem Stellantrieb der eingangs erwähnten Art, der einen in einem Gehäuse angeordneten Stapelaufbau umfasst, insbesondere darin, dass der Stellantrieb ferner umfasst: ein Verbindungselement zur Verbindung des Stapelaufbaus mit dem Gehäuse, wobei die Verbindung zwischen dem Gehäuse und dem Stapelaufbau einen axialen Freiheitsgrad aufweist.

Mit anderen Worten: Das Verbindungselement erlaubt eine Verbindung zwischen dem Gehäuse und dem Stapelaufbau, die einen axialen Freiheitsgrad aufweist. Der axiale Freiheitsgrad erlaubt eine Verschiebung des Stapelaufbaus relativ zum Gehäuse in eine axiale Richtung, beispielsweise in eine Längsrichtung des Stapelaufbaus und/oder des Gehäuses. Wiederum anders ausgedrückt: Das Verbindungselement erlaubt eine Ausdehnung des Stapelaufbaus in eine axiale Richtung, insbesondere eine Längsrichtung, des Stapelaufbaus.

Der Stapelaufbau kann mehrere gestapelte Funktionseinheiten des Stellantriebs aufweisen. Der Stapelaufbau bzw. die einzelnen Funktionseinheiten oder die Zwischenelemente, wie Befestigungselemente oder -mittel, die zwischen den einzelnen Funktionseinheiten angeordnet sind, kann bzw. können während des Herstellungsprozesses und/oder während der Verwendung des Stapelaufbaus oder der Funktionseinheiten (zeitweise, beispielsweise durch Wärmeeinwirkung) unterschiedliche Höhen aufweisen. Mit anderen Worten: Der Stapelaufbau kann eine Toleranz in seiner Höhe aufweisen. Derartige Funktionseinheiten oder -elemente können beispielsweise einen Antriebsmotor und/oder ein Getriebe umfassen.

Der offenbarte Stellantrieb stellt eine Verbindung zwischen dem Gehäuse und dem Stapelaufbau bereit, die einen axial verschieblichen Freiheitsgrad hat. Auf diese Weise kann insbesondere gegen Verdrehungen und radiale Auslenkungen des Stapelaufbaus eine Sicherung gebildet sein, die jedoch die Toleranzen des Stapelaufbaus hinsichtlich seiner Höhe aufnehmen kann. Hierdurch ist die Sicherung des Stapelaufbaus innerhalb des Gehäuses verbessert.

In einer Ausgestaltung ist vorgesehen, dass das Verbindungselement den Stapelaufbau mit dem Gehäuse seitlich verbindet, vorzugsweise den Stapelaufbau im Gehäuse seitlich stützt und/oder einspannt.

Hierdurch kann bei Gewährleistung des axialen Freiheitsgrades der Verbindung, beispielsweise in Längsrichtung des Stapelaufbaus und/oder des Gehäuses, eine stabile Verbindung des Stapelaufbaus mit dem Gehäuse erreicht werden. Die seitliche Verbindung ist beispielsweise eine Verbindung in Richtung einer Querachse, insbesondere einer Querachse senkrecht zur Längsachse, des Gehäuses und/oder des Stapelaufbaus. Hierdurch können (Vibrations-)Bewegungen des Stapelaufbaus relativ zum Gehäuse vermieden, vermindert oder abgeschwächt werden.

In einer Ausgestaltung ist vorgesehen, dass das Verbindungselement von dem Stapelaufbau entlang des axialen Freiheitsgrades, insbesondere entlang einer Längsachse des Stapelaufbaus, beanstandet ist, und/oder dass das Verbindungselement den Stapelaufbau entlang einer Achse quer zum axialen Freiheitsgrad, insbesondere entlang einer Querachse des Stapelaufbaus kontaktiert.

Hierdurch bietet die Verbindung eine gewisse Toleranz bzgl. der Ausdehnung des Stapelaufbaus in Längsrichtung, ohne eine ungewollt große Ausdehnung oder Verschiebung des Stapelaufbaus in Längsrichtung zuzulassen.

In einer Ausgestaltung ist vorgesehen, dass der Stellantrieb ferner umfasst: zumindest zwei Gehäuseteile, wobei das Verbindungselement zwischen den zwei Gehäuseteilen angeordnetes ist, insbesondere wobei das Verbindungselement ein zwischen den zwei Gehäuseteilen angeordnetes Dichtelement ist.

Hierdurch ist ein besonders einfacher Aufbau des Stellantriebs erreicht und die Anzahl der Stellantriebskomponenten verringert. Somit ist ein besonders kompakter und robuster Stellantrieb bereitgestellt.

Nachstehend wird die Erfindung anhand mehrerer bevorzugter Ausführungsbeispiele näher beschrieben.

Es zeigt:
- Fig. 1: einen ersten Stellantrieb in seitlicher Schnittdarstellung mit einer Handantriebswelle in entkuppelter Position,
- Fig. 2: den ersten Stellantrieb in seitlicher Schnittdarstellung mit der Handantriebswelle in gekuppelter Position,
- Fig. 3: ein Aufnahmeelement eines Gehäuses des Stellantriebs in dreidimensionaler Ansicht,
- Fig. 4: ein Handbedienelement des Stellantriebs in dreidimensionaler Ansicht,
- Fig. 5: den Stellantrieb in dreidimensionaler Ansicht,
- Fig. 6: einen Ausschnitt eines Querschnittes eines zweiten Stellantriebs ähnlich dem ersten Stellantrieb.

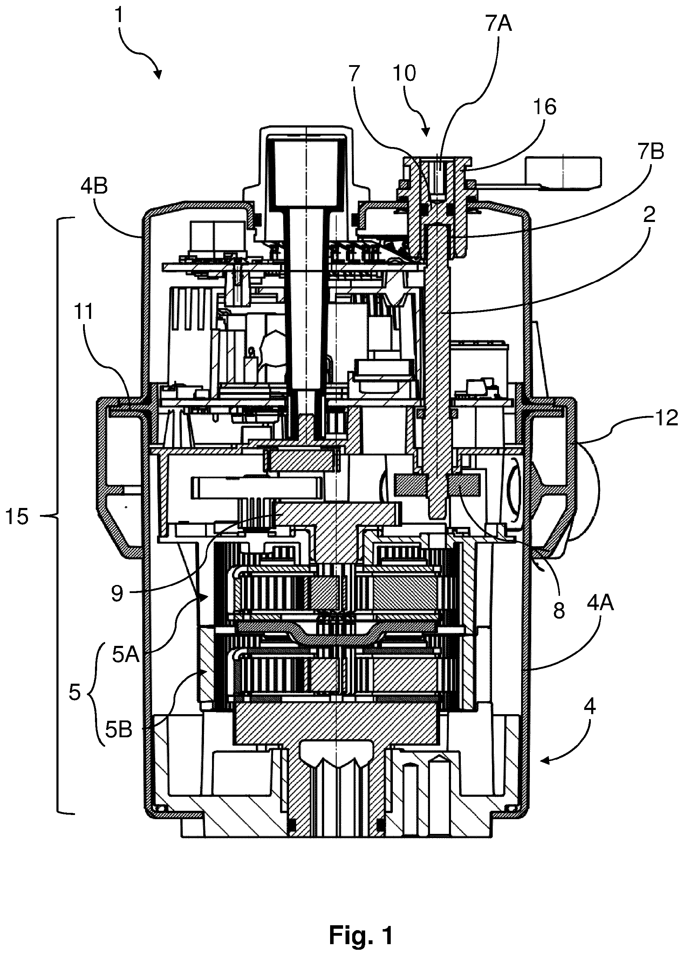

Die Figur 1 zeigt einen ersten Stellantrieb 1 in seitlicher Schnittdarstellung. Der Stellantrieb 1 umfasst eine einkuppelbare Handantriebswelle 2 zum Handantrieb des Stellantriebs 1. Die Handantriebswelle 2 ist direkt oder indirekt mit einem Getriebe des Stellantriebs einkuppelbar bzw. koppelbar. Das Getriebe 5 umfasst im gezeigten Beispiel ein oberes Planetengetriebe 5A und ein unteres Planetengetriebe 5B und dient beispielsweise zur Stellung eines Ventils. Die Figur 1 zeigt die Handantriebswelle 2 in einer entkoppelten Position, d. h. in einer Position, in der die Handantriebswelle 2 nicht mit dem Getriebe 5 gekoppelt ist.

Der Stellantrieb 1 umfasst ein Gehäuse 4. Das Gehäuse 4 umfasst ein erstes, topfförmiges Gehäuseteil 4A und ein zweites Gehäuseteil bzw. einen Gehäusedeckel 4B. Zwischen dem ersten und dem zweiten Gehäuseteil 4A, 4B ist ein Dichtelement 11 oder ein Dichtring 11 angebracht. Das Dichtelement 11 ist beispielsweise ein Träger von einem oder mehreren Dichtringen, wie O-Ringen.

Das Gehäuse 4 umfasst ferner eine Kupplungsstelle 10 für ein Handbedienelement 3 zur lösbaren Verbindung des Handbedienelements 3 mit dem Gehäuse 4, insbesondere dem Gehäusedeckel 4B. Die Kupplungsstelle 10 kann auf das Handbedienelement 3 angepasst sein bzw. ein Gegenstück zum Handbedienelement 3 darstellen. Alternativ kann die Kupplungsstelle 10 zur lösbaren Verbindung herkömmlicher Handbedienelemente, wie Sechskant-Schlüssel, mit dem Gehäuse 4 geeignet sein. Die Kupplungsstelle 10 umfasst ein Kupplungselement 7. Das Kupplungselement 7 weist eine nach außen gerichtete, d. h. der Umgebung des Stellantriebs 1 zugewandte, erste Aufnahme 7A auf. Die erste Aufnahme 7A ist dazu ausgestaltet, das Handbedienelement 3 bzw. ein Teil oder ein (Kupplungs-) Ende des Handbedienelements aufzunehmen, um das Handbedienelement 3 mit dem Gehäuse 4 zu verbinden, insbesondere kraft- und/oder formschlüssig zu verbinden.

Das Kupplungselement 7 weist ferner eine zweite Aufnahme 7B auf. Die zweite Aufnahme 7B ist nach innen gerichtet, d. h. dem Inneren des Stellantriebs 1 bzw. des Gehäuses 4 zugewandt. Die zweite Aufnahme 7B ist beispielsweise als eine Rutschkupplung oder eine Toleranzhülse ausgestaltet. Die zweite Aufnahme 7B ist dazu eingerichtet, die Handantriebswelle 2 bzw. ein erstes Ende der Handantriebswelle 2 aufzunehmen. Über das Kupplungselement 7 kann das Handbedienelement 3 mit der Handantriebswelle 2 verbunden bzw. gekoppelt werden.

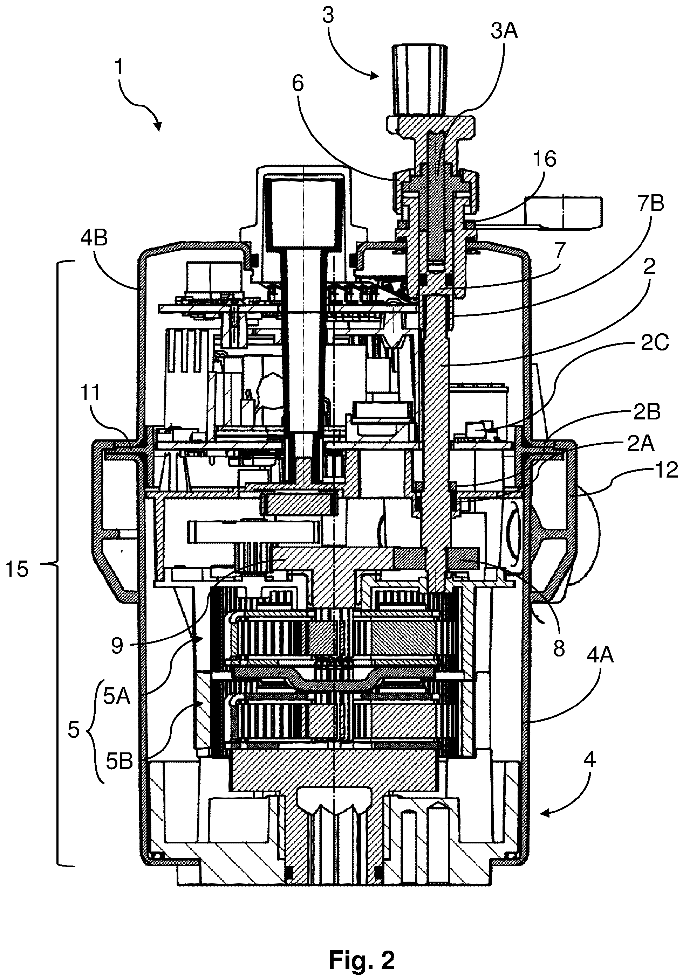

Die Figur 2 zeigt den Stellantrieb 1 aus Figur 1 in seitlicher Schnittdarstellung. Gleiche o. ä. Merkmale sind mit gleichen Bezugszeichen versehen. Die Figur 2 zeigt die Handantriebswelle 2 in einer gekoppelten oder eingekuppelten Position, d. h. in einer Position, in der die Handantriebswelle 2 mit dem Getriebe 5 gekoppelt ist. Die Handantriebswelle 2 weist ein Kupplungsmittel 8 auf. In der gekoppelten Position ist das Kupplungsmittel 8 der Handantriebswelle 2 mit einem Kupplungsmittel 9 des Getriebes 5 gekoppelt bzw. kraft- und oder formschlüssig verbunden. Die Kupplungsmittel 8 und 9 sind beispielsweise ineinandergreifende Eingreifmittel, wie Zahnräder. Das Kupplungsmittel 9 ist in dem oberen Planetengetriebe 5A gelagert. Das obere Planetengetriebe 5A leitet eine über das Kupplungsmittel 9 eingeleitete Kraft in das untere Planetengetriebe 5B ein.

Durch eine translatorische Bewegung der Handantriebswelle 2 entlang einer Längsachse der Handantriebswelle 2 kann die Handantriebswelle 2 aus der entkoppelt Position (wie in Figur 1 dargestellt) in die gekoppelt Position (wie in Figur 2 dargestellt) bewegt, gebracht bzw. gezwungen werden. Wie aus Figur 2 ersichtlich bewirkt bzw. erzwingt das Verbinden des Handbedienelements 3 mit dem Gehäuse 4 die translatorische Bewegung der Handantriebswelle 2 aus der entkoppelt Position in die gekoppelte Position. Mit anderen Worten: Durch das Einführen eines Kupplungsendes 3A des Handbedienelements 3 in die erste Aufnahme 7A sowie die Bewegung des Handbedienelements 3 entlang der Längsachse der Handantriebswelle 2 bis zu einer Einrast- oder Endposition des Handbedienelements 3 an dem Gehäuseteil 4, wird die translatorischen Bewegung der Handantriebswelle 2 aus der entkoppelt Position in die gekoppelte Position erzwungen.

Durch Herausnahme des Handbedienelements 3 aus der ersten Öffnung 7A wird von einer Rückstellfeder 2A eine Bewegung der Handantriebswelle 2 aus der gekoppelten Position in die entkoppelte Position erzwungen. Mit anderen Worten: In einer nicht mit dem Gehäuse 4 verbundenen Position des Handbedienelements 3 befindet sich die Handantriebswelle 2 in der entkoppelten Position. Wiederum anders ausgedrückt: Durch Trennung bzw. Herausnahme des Handbedienelements 3 von bzw. aus dem Gehäuse 4 wird die Entkopplung der Handantriebswelle 2 von dem Getriebe 5 erzwungen. Dies geschieht beispielsweise durch eine Rückstellkraft, gegen die die Handantriebswelle 2 aus der entkoppelten Position in die gekoppelte Position bewegt wird. Ergänzend oder alternativ geschieht dies durch den Kraft- bzw. Reibschluss zwischen dem Kupplungsende 3A des Handbedienelements 3 und der ersten Aufnahme 7A.

Das Handbedienelement 3 umfasst wie in den Figuren 1 und 2 dargestellt ein Aufnahmeelement 6 zur form- und/oder kraftschlüssigen Verbindung des Handbedienelements 3 mit dem Gehäuse 4, spezieller mit einem entsprechend entgegengesetzt ausgestalteten Aufnahmeelement 16 des Gehäuses 4. Das Handbedienelement 3 ist drehbar in dem Aufnahmeelement 6 des Handbedienelements 3 angeordnet. Das Aufnahmeelement 6 umgreift das Kupplungsende 3A des Handbedienelements 3. Das Handbedienelements 3 ist über die Aufnahmeelement 6 und 16 mittels eines Bajonettverschlusses mit dem Gehäuse 4 verbindbar. Mit anderen Worten: Das Aufnahmeelement 6 des Handbedienelements 3 ist in das Aufnahmeelement 16 des Gehäuses 4 drehbar einrastbar.

Der Stellantrieb 1 umfasst ferner einen Sensor und ein von dem Sensor detektierbares Element 2B, um die eingekuppelte oder gekoppelte Position der Handantriebswelle 2 von der ausgekuppelten oder entkoppelt Position der Handantriebswelle 2 zu unterscheiden. Dazu kann ein bewegliches Kupplungselement oder -mittel zur Kupplung der Handantriebswelle 2 mit dem Getriebe 5 das detektierbare Element 2B aufweisen. Das bewegliche Kupplungselement mit dem detektierbaren Element 2B kann beispielsweise oder alternativ das Kupplungselement 7, die Handantriebswelle 2 selbst oder zumindest eines der Kupplungsmittel 8 oder 9 sein. Beispielsweise detektiert der Sensor eine translatorische Bewegung des detektierbaren Elements 2B entlang der Längsachse der Handantriebswelle 2. Das detektierbare Element 2B kann beispielsweise ein Permanentmagnet sein, der neben oder nahe eines stationären, vorzugsweise vom Gehäuse 4 oder einer Steuerungselektronik 2C umfassten, Magnetfeldsensor angebracht ist. Alternativ oder ergänzend kann der Stellantrieb eine andere Art detektierbares Element 2B und/oder Sensor aufweisen, um die eingekuppelte Position von der ausgekuppelten Position zu unterscheiden.

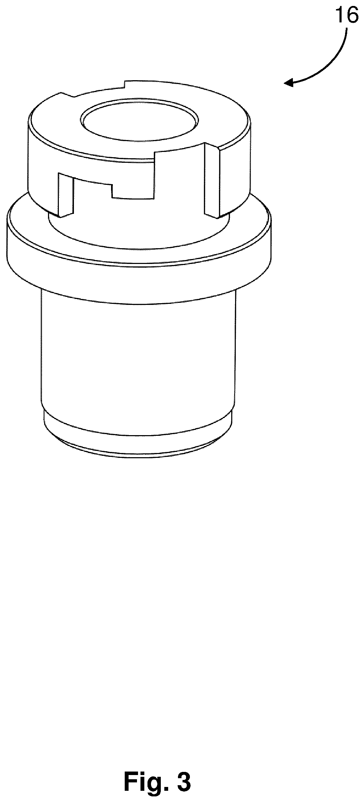

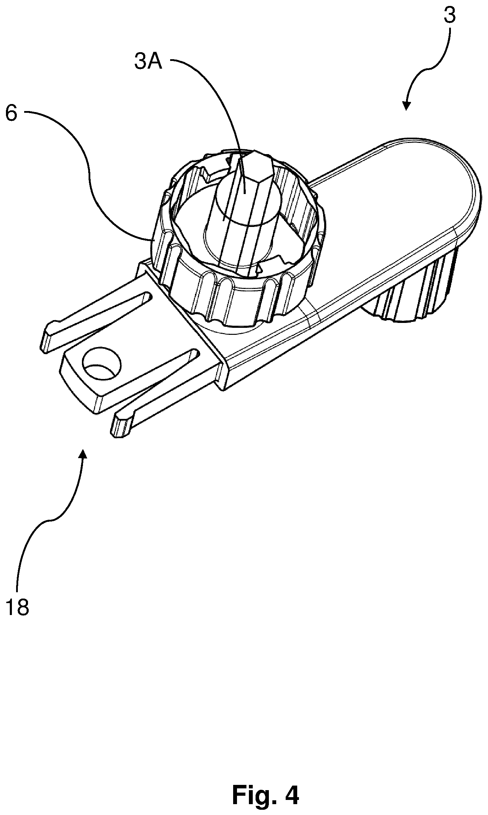

Das Aufnahmeelement 16 ist gesondert in Figur 3 in dreidimensionaler Ansicht dargestellt. Das Handbedienelement 3 ist gesondert in Figur 4 in dreidimensionaler Ansicht dargestellt. Gleiche o. ä. Merkmale sind mit gleichen Bezugszeichen versehen.

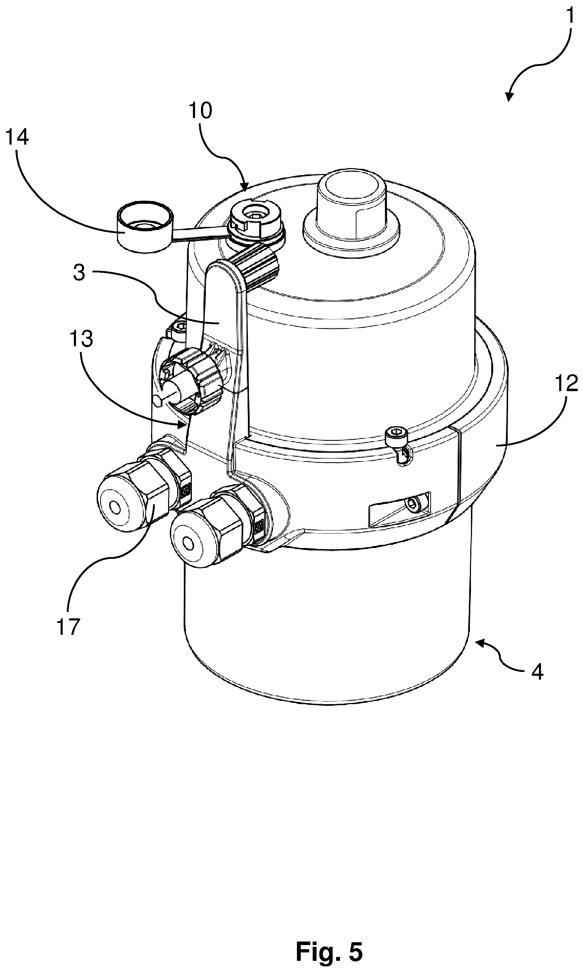

Die Figur 5 zeigt eine dreidimensionale Ansicht des Stellantriebs 1 aus den Figuren 1 und 2. Gleiche o. ä. Merkmale sind mit gleichen Bezugszeichen versehen. Wie in den Figuren 4 und 5 deutlich zu sehen ist, ist das Handbedienelement 3 als Kurbel ausgestaltet. Das Handbedienelement 3 ist an dem Gehäuse 4 an einer Außenwand, hier der Mantelfläche des Gehäuses 4 befestigbar. In der befestigten Position des Handbedienelements 3 an der Gehäuseaußenwand ist das Handbedienelement 3 nicht mit dem Gehäuse 4 zur Kupplung des Handantriebswelle 2 mit dem Getriebe 5 verbunden. Mit anderen Worten: Die befestigte Position des Handbedienelements 3 ist verschieden von der oben beschriebenen verbundenen Position des Handbedienelements 3. Beispielsweise umfasst der Dichtring 11, der zwischen den beiden Gehäuseteilen 4A und 4B des Gehäuses angeordnet ist, eine Aufnahme 13 für das Handbedienelement 3 zur Befestigung bzw. Lagerung des Handbedienelements 3 an dem Gehäuse 4.

Alternativ oder ergänzend kann der Stellantrieb 1, wie in Figur 5 dargestellt, ein Spannband 12 aufweisen. Das Spannband 12 umfasst im gezeigt Beispiel Kabeldurchführungen 17 zur Durchführung von Anschlusskabel in den Innenraum des Gehäuses 4. Hierzu kann das Gehäuse 4 eine Öffnung aufweisen, die mit Öffnungen der Kabeldurchführungen 17 zumindest teilweise überlappt. Ebenso wie der Dichtring kann das Spannband 12 eine Aufnahme 13 für das Handbedienelement 3 aufweisen.

Das Handbedienelement 3 weist Eingreifmittel 18 auf (siehe Fig. 4), die in die Aufnahme 13 eingreifen bzw. von dieser aufgenommen werden können. Auf diese Weise kann das Handbedienelement 13 platzsparend an dem Gehäuse 4 angeordnet werden bzw. an diesem befestigt werden, wenn das Handbedienelement 3 nicht in Gebrauch zum Handantrieb des Stellantriebs 1 ist. Die Eingreifmittel 18 umschließen eine Öffnung. An der Öffnung kann das das Handbedienelement 3 zur Aufbewahrung, beispielsweise an einem Schlüsselbund, befestigt werden.

Ergänzend oder alternativ kann das Handbedienelement 3 ein erstes Magnetelement und/oder ferromagnetisches Element umfassen, dass mit einem zweiten Magnetelement und/oder ferromagnetischen Element an dem Gehäuse 4, dem Dichtring 11 und/oder dem Spannband 12 zusammenwirkt, um das Handbedienelement 3 an dem Gehäuse 4 zu befestigen.

In dem beschriebenen nicht verbundenen Zustand des Handbedienelements 13 mit dem Gehäuse 4 kann eine, vorzugsweise an dem Gehäuse 4 befestigte, Abdeckung 14 die Kupplungsstelle 10, insbesondere das Aufnahmeelement 16, des Gehäuses 4 für das Handbedienelement 3 abdecken.

Wie in den Figuren 1 und 2 dargestellt umfasst der Stellantrieb 1 einen Stapelaufbau 15. Der Stapelaufbau 15 umfasst ein oder mehrere Funktionseinheiten des Stellantriebs 1. Die Funktionseinheiten umfassen beispielsweise einen Antriebsmotor und/oder ein oder mehrere Getriebe des Stellantriebs 1. Zur sicheren und festen Anordnung des Stapelaufbaus 15 innerhalb des Gehäuses 4 bzw. zur Verbindung des Stapelaufbaus mit dem Gehäuse 4 umfasst der Stellantrieb 1 ein Verbindungselement. Das Verbindungselement ist beispielsweise das oben beschriebene Dichtelement 11 und/oder ist von diesem umfasst.

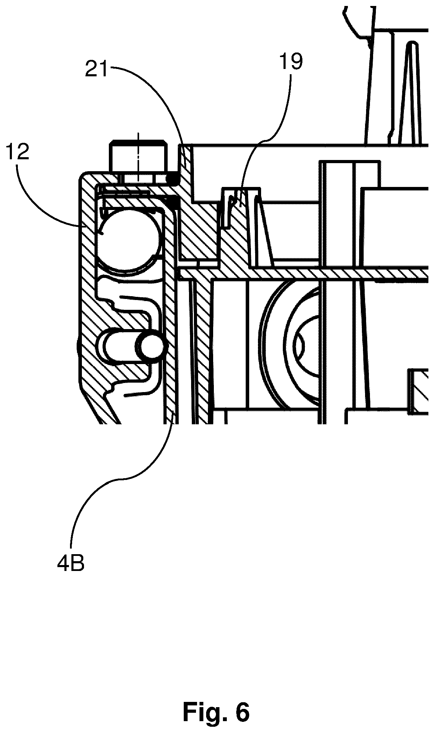

Figur 6 zeigt einen Ausschnitt eines Querschnittes eines zweiten Stellantriebs 20 ähnlich dem in den Figuren 1 und 2 gezeigten ersten Stellantriebs 1. Gleiche o.ä. Merkmale sind mit gleichen Bezugszeichen versehen. Figur 6 zeigt ferner ein Stapelaufbauelement 19 als Teil eines in dem dargestellten Stellantrieb angeordneten Stapelaufbaus 15. Das Stapelaufbauelement 19 wirkt mit einem Verbindungselement 21, das das Dichtelement 11 umfassen kann oder von diesem umfasst sein kann, zur Verbindung des Stapelaufbaus 15 mit dem Gehäuse 4 zusammen. Das Verbindungselement 21 kann dem Dichtelement 11 entsprechen oder ein zweites Dichtelement sein. Wie dargestellt, sind das Verbindungselement 21 und das Stapelaufbauelement 19 seitlich, d. h. in einer Querrichtung zum Stapelaufbau und/oder zum Gehäuse 4, miteinander verbunden, insbesondere mittels Kraft- oder Reibschluss.

Wie aus Figur 6 ersichtlich, sind der Stapelaufbau 15 bzw. das Stapelaufbauelement 19 mit dem Verbindungselement 21, in Längsrichtung des Stapelaufbaus 15 beabstandet, wobei das Stapelaufbauelement 19 und Verbindungselement 21 in Querrichtung des Stapelaufbaus 15 verbunden sind bzw. sich kontaktieren. Mit anderen Worten: Die Verbindung des Stapelaufbaus 15 mit dem Gehäuse 4 weist einen axialen Freiheitsgrad auf, hier in Längsrichtung des Stapelaufbaus 15. Wiederum anders ausgedrückt: Das Verbindungselement 21 ist dazu ausgestaltet, dass Gehäuse 4 mit einem Stapelaufbau 15 variierender Höhe zu verbinden. Auf diese Weise können Abweichungen der Erstreckung des Stapelaufbaus 15 in Richtung des axialen Freiheitsgrades, bzw. hier in der Längsrichtung des Stapelaufbaus 15, die bei der Herstellung und/oder im Betrieb des Stapelaufbaus auftreten können, toleriert bzw. berücksichtigt werden.

### Bezugszeichenliste

- 1: Erster Stellantrieb
- 2: Handantriebswelle
- 2A: Rückstellfeder
- 2B: Detektierbares Element
- 2C: Steuerungselektronik
- 3: Handbedienelement
- 3A: Kupplungsende des Handbedienelements
- 4: Gehäuse
- 4A: Erstes Gehäuseteil
- 4B: Zweites Gehäuseteil
- 5: Getriebe des ersten Stellantriebs
- 5A: Oberes Planetengetriebe
- 5B: Unteres Planetengetriebe
- 6: Aufnahmeelement des Handbedienelements
- 7: Kupplungselement
- 7A: Erste Aufnahme des Kupplungselements
- 7B: Zweite Aufnahme des Kupplungselements
- 8: Kupplungsmittel der Handantriebswelle
- 9: Kupplungsmittel des Getriebes
- 10: Kupplungsstelle des Gehäuses
- 11: Dichtelement
- 12: Spannband
- 13: Aufnahme des Spannbands
- 14: Abdeckung
- 15: Stapelaufbau
- 16: Aufnahmeelement des Gehäuses
- 17: Kabeldurchführungen des Spannbands
- 18: Eingreifmittel des Handbedienelement
- 19: Stapelaufbauelement
- 20: Zweiter Stellantrieb
- 21: Verbindungs- oder zweites Dichtelement

## Patentansprüche

1. Stellantrieb (1) umfassend ein Gehäuse (4), ein Getriebe (5), eine einkuppelbare Handantriebswelle (2) zum Handantrieb und ein Handbedienelement (3),
wobei das Handbedienelement (3) lösbar mit dem Gehäuse (4) verbindbar ist und wobei das Handbedienelement (3) in einer mit dem Gehäuse (4) verbundenen Position eine direkte oder indirekte Kupplung der Handantriebswelle (2) zu dem Getriebe (5) erzwingt, wobei das Handbedienelement (3) in der mit dem Gehäuse (4) verbundener Position die Handantriebswelle (2) entgegen einer Rückstellkraft in eine eingekuppelte Position entlang einer Längsachse der Handantriebswelle (2) zwingt, wobei das Handbedienelement (3) drehbar in einem Aufnahmeelement (6) angeordnet ist, wobei das Aufnahmeelement (6) mit einem Bajonettverschluss mit dem Gehäuse (4) verbindbar ist und wobei das Handbedienelement (3) das Aufnahmeelement (6) aufweist, welches mit dem Gehäuse (4) drehbar einrastet.

2. Stellantrieb (1) nach Anspruch 1, wobei das Handbedienelement (3) in der mit dem Gehäuse (4) verbundenen Position direkt oder indirekt mit der Handantriebswelle (2) gekoppelt ist.

3. Stellantrieb (1) nach einem der vorangehenden Ansprüche, wobei ein Kupplungsmittel (8) der Handantriebswelle (2) in einer oder der eingekuppelten Position der Handantriebswelle (2) mit einem Kupplungsmittel (9) des Getriebes (5), vorzugsweise direkt, kraft- und/oder formschlüssig verbunden ist.

4. Stellantrieb (1) nach einem der vorangehenden Ansprüche, wobei zwischen einer Kupplungsstelle (10) des Gehäuses (4) für das Handbedienelement (3) und das Getriebe (5) eine Rutschkupplung (7B), insbesondere eine Toleranzhülse, ausgebildet ist.

5. Stellantrieb (1) nach einem der vorangehenden Ansprüche, ferner umfassend eine oder die Rutschkupplung (7B), insbesondere eine oder die Toleranzhülse, umfassendes Kupplungselement (7) zur Kupplung des Handantriebselements (3) mit der Handantriebswelle (2).

6. Stellantrieb (1) nach einem der vorangehenden Ansprüche, wobei die Handantriebswelle (2) oder ein bewegliches Kupplungselement zur Kupplung der Handantriebswelle (2) mit dem Getriebe (5) ein detektierbares Element aufweist, welches mit einem Sensor zusammenwirkt, um die oder eine eingekuppelte Position von einer ausgekuppelten Position der Handantriebswelle (2) zu unterscheiden.

7. Stellantrieb (1) nach einem der vorangehenden Ansprüche, wobei das Handbedienelement (3), insbesondere eine Handantriebskurbel, an dem Stellantriebsgehäuse (4) befestigbar ist.

8. Stellantrieb (1) nach einem der vorangehenden Ansprüche, ferner umfassend:
einen Dichtring (11), der zwischen zwei Gehäuseteilen (4A, 4B) des Stellantriebsgehäuse (4) eingelegt ist; und/oder ein Band (12), insbesondere ein Spannband, das zumindest teilweise um das Gehäuse (4) oder ein Gehäuseteil (4A, 4B) des Stellantriebs (1) angeordnet ist;
wobei das Stellantriebsgehäuse (4) und/oder das Band (12) eine vorzugsweise angeformte Aufnahme (13), insbesondere eine Rastaufnahme und/oder eine magnetische Aufnahme, für das Handbedienelement (3) aufweist.

9. Stellantrieb (1) nach einem der vorangehenden Ansprüche, ferner umfassend eine Abdeckung (14) für eine oder die Kupplungsstelle (10) des Gehäuses (4) für das Handbedienelement (3).

10. Stellantrieb (20) nach einem der vorangehenden Ansprüche, umfassend einen in dem Gehäuse (4) angeordneten Stapelaufbau (15) und ein Verbindungselement (21) zur Verbindung des Stapelaufbaus (15) mit dem Gehäuse (4), wobei die Verbindung zwischen dem Gehäuse (4) und dem Stapelaufbau (15) einen axialen Freiheitsgrad aufweist.

11. Stellantrieb (20) nach Anspruch 10, wobei das Verbindungselement (21) den Stapelaufbau (15) mit dem Gehäuse (4) entlang einer Querachse senkrecht zur Längsachse des Gehäuses und/oder des Stapelaufbaus verbindet, vorzugsweise den Stapelaufbau (15) im Gehäuse (4) entlang der Querachse stützt und/oder einspannt.

12. Stellantrieb (20) nach Anspruch 10 oder 11, wobei das Verbindungselement (21) von dem Stapelaufbau (15) entlang des axialen Freiheitsgrades, insbesondere entlang einer Längsachse des Stapelaufbaus (15), beabstandet ist.

13. Stellantrieb (20) nach einem der Ansprüche 10 bis 12, ferner umfassend zumindest zwei Gehäuseteile (4A, 4B), wobei das Verbindungselement (21) zwischen den zwei Gehäuseteilen (4A, 4B) angeordnetes ist, insbesondere wobei das Verbindungselement (21) ein zwischen den zwei Gehäuseteilen (4A, 4B) angeordnetes Dichtelement (11) ist.

## Claims

1. Actuator (1)
comprising a housing (4), a gear (5), an engageable manual drive shaft (2) for the manual drive and a manual operating element (3);
wherein the manual operating element (3) can be detachably connected to the housing (4) and wherein the manual operating element (3), in a position connected to the housing (4), forces a direct or indirect coupling of the manual drive shaft (2) to the gear (5), wherein the manual operating element (3), in the position connected to the housing (4), forces the manual drive shaft (2) against a restoring force into a coupled position along a longitudinal axis of the manual drive shaft (2), wherein the manual operating element (3) is rotatably arranged in a receiving element (6), wherein the receiving element (6) is connectable to the housing (4) by means of a bayonet catch, and wherein the manual operating element (3) comprises the receiving element (6), which rotatably engages with the housing (4).

2. Actuator (1) according to claim 1, wherein the manual operating element (3), in the position connected to the housing (4), is coupled directly or indirectly to the manual drive shaft (2).

3. Actuator (1) according to one of the preceding claims, wherein a coupling means (8) of the manual drive shaft (2) in one or the engaged position of the manual drive shaft (2) is connected to a coupling means (9) of the gear (5), preferably directly, in a force-fit and/or form-fit manner.

4. Actuator (1) according to one of the preceding claims, wherein a slipping clutch (7B), in particular a tolerance sleeve, is formed between a coupling point (10) of the housing (4) for the manual operating element (3) and the gear (5).

5. Actuator (1) according to one of the preceding claims, further comprising one or the slipping clutch (7B), in particular one or the tolerance sleeve, for coupling the manual drive element (3) to the manual drive shaft (2).

6. Actuator (1) according to one of the preceding claims, wherein the manual drive shaft (2) or a movable coupling element for coupling the manual drive shaft (2) to the gear (5) has a detectable element which interacts with a sensor in order to distinguish the or an engaged position from a disengaged position of the manual drive shaft (2).

7. Actuator (1) according to one of the preceding claims, wherein the manual operating element (3), in particular a manual drive crank, can be attached to the actuator housing (4).

8. Actuator (1) according to one of the preceding claims, further comprising:
a sealing ring (11) which is inserted between two housing parts (4A, 4B) of the actuator housing (4); and/or a band (12), in particular a tensioning band, which is arranged at least partially around the housing (4) or a housing part (4A, 4B) of the actuator (1);
wherein the actuator housing (4) and/or the band (12) has a preferably integrally formed receptacle (13), in particular a latching receptacle and/or a magnetic receptacle, for the manual operating element (3).

9. Actuator (1) according to one of the preceding claims, further comprising a cover (14) for one or the coupling point (10) of the housing (4) for the manual operating element (3).

10. Actuator (1) according to one of the preceding claims, comprising a stacked structure (15) arranged in a housing (4) and a connecting element (21) for connecting the stacked structure (15) to the housing (4), wherein the connection between the housing (4) and the stacked structure (15) has an axial degree of freedom.

11. Actuator (20) according to claim 10, wherein the connecting element (21) laterally connects the stacked structure (15) to the housing (4) along a transverse axis perpendicular to the longitudinal axis of the housing and/or the stacked structure, preferably laterally supporting and/or clamping the stacked structure (15) in the housing (4).

12. Actuator (20) according to claim 10 or 11, wherein the connecting element (21) is spaced from the stacked structure (15) along the axial degree of freedom, in particular along a longitudinal axis of the stacked structure (15).

13. Actuator (20) according to one of claims 10 to 12, further comprising at least two housing parts (4A, 4B), wherein the connecting element (21) is arranged between the two housing parts (4A, 4B), in particular wherein the connecting element (21) is a sealing element (11) arranged between the two housing parts (4A, 4B).

## Revendications

1. Actionneur (1) comprenant un boîtier (4), un engrenage (5), un arbre d'entraînement manuel (2) pouvant être accouplable pour l'entraînement manuel et un élément de commande manuelle (3), l'élément de commande manuelle (3) étant reliable de manière amovible au boîtier (4) et l'élément de commande manuelle (3) forçant, dans une position reliée au boîtier (4), un accouplement direct ou indirect de l'arbre d'entraînement manuel (2) à la engrenage (5), l'élément de commande manuelle (3), dans la position reliée au boîtier (4), forçant l'arbre d'entraînement manuel (2), contre une force de rappel, dans une position accouplée le long d'un axe longitudinal de l'arbre d'entraînement manuel (2), l'élément de commande manuelle (3) étant disposé de manière rotative dans un élément de réception (6), l'élément de réception (6) étant reliable au boîtier (4) par une fermeture à baïonnette et l'élément de commande manuelle (3) présentant l'élément de réception (6) qui s'enclenche de manière rotative avec le boîtier (4).

2. Actionneur (1) selon la revendication 1, dans lequel l'élément de commande manuelle (3) est couplé directement ou indirectement à l'arbre d'entraînement manuel (2) dans la position reliée au boîtier (4).

3. Actionneur (1) selon l'une des revendications précédentes, dans lequel un moyen d'accouplement (8) de l'arbre d'entraînement manuel (2) est relié par adhérence et/ou par complémentarité de forme à un moyen d'accouplement (9) de l'engrenage (5), de préférence directement, dans une ou la position accouplée de l'arbre d'entraînement manuel (2).

4. Actionneur (1) selon l'une des revendications précédentes, dans lequel un accouplement à friction (7B), en particulier une douille de tolérance, est formé entre un point d'accouplement (10) du boîtier (4) pour l'élément de commande manuelle (3) et l'engrenage (5).

5. Actionneur (1) selon l'une des revendications précédentes, comprenant en outre un élément d'accouplement (7) comprenant un ou l'accouplement à friction (7B), en particulier une ou la douille de tolérance, pour l'accouplement de l'élément d'entraînement manuel (3) à l'arbre d'entraînement manuel (2).

6. Actionneur (1) selon l'une des revendications précédentes, dans lequel l'arbre d'entraînement manuel (2) ou un élément d'accouplement mobile pour accoupler l'arbre d'entraînement manuel (2) à l'engrenage (5) comprend un élément détectable qui interagit avec un capteur pour distinguer la ou une position accouplée d'une position désaccouplée de l'arbre d'entraînement manuel (2).

7. Actionneur (1) selon l'une des revendications précédentes, dans lequel l'élément de commande manuelle (3), en particulier une manivelle d'entraînement manuel, est fixable sur le boîtier de l'actionneur (4).

8. Actionneur (1) selon l'une des revendications précédentes, comprenant en outre :
une bague d'étanchéité (11) qui est insérée entre deux parties de boîtier (4A, 4B) du boîtier de l'actionneur (4) ; et/ou une bande (12), en particulier une bande de serrage, qui est disposée au moins partiellement autour du boîtier (4) ou d'une partie de boîtier (4A, 4B) du boîtier de l'actionneur (1) ;
le boîtier de l'actionneur (4) et/ou la bande (12) présentant un logement (13) de préférence moulé, en particulier un logement d'encliquetage et/ou un logement magnétique, pour l'élément de commande manuelle (3).

9. Actionneur (1) selon l'une des revendications précédentes, comprenant en outre un couvercle (14) pour un ou le point d'accouplement (10) du boîtier (4) pour l'élément de commande manuelle (3).

10. Actionneur (20) selon l'une des revendications précédentes, comprenant une structure d'empilage (15) disposée dans le boîtier (4) et un élément de liaison (21) pour relier la structure d'empilage (15) au boîtier (4), la liaison entre le boîtier (4) et la structure d'empilage (15) présentant un degré de liberté axial.

11. Actionneur (20) selon la revendication 10, dans lequel l'élément de liaison (21) relie la structure d'empilage (15) au boîtier (4) le long d'un axe transversal perpendiculaire à l'axe longitudinal du boîtier et/ou de la structure d'empilage, de préférence soutient et/ou serre la structure d'empilage (15) dans le boîtier (4) le long de l'axe transversal.

12. Actionneur (20) selon la revendication 10 ou 11, dans lequel l'élément de liaison (21) est espacé de la structure d'empilage (15) le long du degré de liberté axial, notamment le long d'un axe longitudinal de la structure d'empilage (15).

13. Actionneur (20) selon l'une des revendications 10 à 12, comprenant en outre au moins deux parties de boîtier (4A, 4B), l'élément de liaison (21) étant disposé entre les deux parties de boîtier (4A, 4B), en particulier dans lequel l'élément de liaison (21) est un élément d'étanchéité (11) disposé entre les deux parties de boîtier (4A, 4B).
